## Europäisches Patentamt

## European Patent Office

## Office européen des brevets

(19)

(11) Veröffentlichungsnummer: **0 230 491 B1**

(12) **EUROPÄISCHE PATENTSCHRIFT**

(45) Veröffentlichungstag der Patentschrift:
03.05.89

(51) Int. Cl.⁴: **G01L 23/10**, G01L 5/14

(21) Anmeldenummer: **86100819.1**

(22) Anmeldetag: **22.01.86**

(54) **Aufnehmer, insbesondere für Hochdruckmessungen.**

(43) Veröffentlichungstag der Anmeldung:
**05.08.87 Patentblatt 87/32**

(45) Bekanntmachung des Hinweises auf die Patenterteilung:
**03.05.89 Patentblatt 89/18**

(84) Benannte Vertragsstaaten:
**AT CH DE GB LI SE**

(56) Entgegenhaltungen:
**EP-A- 0 090 871**
**EP-A- 0 090 872**
**CH-A- 587 478**
**CH-C- 446 761**
**DE-A- 2 318 128**
**DE-C- 1 775 646**

(73) Patentinhaber: **Kristal Instrumente AG,**
**Eulachstrasse 22, CH-8408 Winterthur(CH)**

(72) Erfinder: **Engeler, Paul, Allmendweg 13,**
**CH-8500 Frauenfeld(CH)**
Erfinder: **Sonderegger, Hans Conrad,**
**Sonnhaldenstrasse 7, CH-8413 Neftenbach(CH)**
Erfinder: **Wolfer, Peter, Kirchweg 347,**
**CH-8450 Kleinandelfingen(CH)**
Erfinder: **Calderara, Reto, Sonnhaldenstrasse 9,**
**CH-8413 Neftenbach(CH)**

(74) Vertreter: **Schmidt, Horst, Dr., Patentanwälte Pohlmann**
**& Schmidt Siegfriedstrasse 8, D-8000 München 40(DE)**

## Beschreibung

Die Erfindung betrifft einen Aufnehmer, insbesondere für Hochdruckmessungen, gemäß Oberbegriff des Patentanspruches 1.

Die Messung von Drücken bis $10^9$ Pa ist ein Spezialgebiet, das insbesondere in der Ballistik eine große Bedeutung hat. Drücke bis zu $2 \times 10^8$ Pa treten auch bei Einspritzvorgängen an Dieselmotoren auf. Bei neueren Pulsschneidvorgängen wird mit Hydraulik-Druckspitzen bis $4 \times 10^8$ Pa gearbeitet. Darüber hinausgehende Drücke sind jedoch praktisch nur in der Schießpulverentwicklung und Ballistik anzutreffen.

Die Erfindung richtet sich insbesondere, jedoch nicht ausschließlich auf Aufnehmer zur Erfassung derartig hoher Drücke. Ein bevorzugtes Anwendungsgebiet ist daher die ballistische Druckmessung bei der Entwicklung von Geschützen und Munition, um den Druckverlauf während des Abfeuern eines Geschosses zu ermitteln. Bei der Pulverentwicklung werden entsprechende Messungen in sog. Druckbomben durchgeführt. Ein anderes Anwendungsgebiet ist die Hochdruckmessung in flüssigen Medien. In allen Fällen handelt es sich um Vorgänge, die wenige Millisekunden dauern und zu Druckamplituden bis $10^9$ Pa führen können.

Bekannt für solche Messungen sind Kupferstauchelemente, die insbesondere bei der Munitionsabnahme heute noch Verwendung finden. Bevorzugt wird jedoch heute die Messung auf elektronischem Wege mittels insbesondere piezoelektrischer Aufnehmer. Die Piezomeßtechnik ist für dynamische Hochdruckmessungen besonders vorteilhaft, da das außergewöhnlich hohe Auflösungsvermögen es gestattet, den Druckverlauf von der Zündung mit Drücken von wenigen Pascal bis zur Verbrennung mit Drücken von bis zu $10^9$ Pa sehr genau zu verfolgen. Zudem erlaubt der Piezoeffekt als Volumeneffekt in Piezokristallen eine Messung, die praktisch verformungslos erfolgt. Die Membranpartien solcher Piezoaufnehmer unterliegen daher grundsätzlich nur minimalen Verformungen, was grundsätzlich eine hohe Lebensdauer bedeutet.

Zur druckdichten Befestigung derartiger Aufnehmer in einem Bauteil, z.B. Druckbehälter, wurden sowohl die Abmessungen der darin einzubringenden Montagebohrungen als auch die Aufnehmerabmessungen weitgehend standardisiert; insbesondere hat die NATO diesbezügliche Normen und Vorschriften erlassen. Zwei Arten von Dichtungsanordnungen werden verwendet, nämlich die Schulter- und die Sacklochdichtung. In Europa werden aufgrund entsprechender NATO-Vorschriften vorwiegend Aufnehmer mit Schulterdichtung verwendet, während in USA die Sacklochdichtung bevorzugt wird.

Wegen der kurzzeitigen Druckstöße mit ungewöhnlich hohen Amplituden ist die Abdichtung der Aufnehmer in der Montagebohrung von besonderer Bedeutung. Die kleinste Undichtigkeit kann zu Flammdurchstößen führen, wodurch die Aufnehmer nach wenigen Einsätzen ausglühen können und unbrauchbar werden. Häufig werden als Dichtflächen geläppte Flächen vorgesehen, die zwar keine zusätzlichen Dichtmittel in Gestalt von Dichtringen oder dergl. erfordern, jedoch den Nachteil haben, daß nach jedem Ausbau des Aufnehmers ein Nachläppen erforderlich ist.

Auch wurden schon dünne Kupferringe verwendet, die jedoch von den Auflageflächen nur schwierig wieder zu entfernen sind. Besonders vorteilhaft haben sich selbstanpassende Stahldichtringe gemäß der DE-C 1 775 646 erwiesen, welche eine einwandfreie Abdichtung schaffen und eine Reduzierung der für einen sicheren dichten Sitz der Aufnehmer aufzubringenden Drehmomente ermöglichen. Dennoch sind die Anzugsdrehmomente vergleichsweise hoch und können insbesondere Werte bis 60 Nm betragen, was entsprechende Verformungen der Dichtflächen und anderer empfindlicher Aufnehmerteile mit Auswirkung auf die Meßempfindlichkeit zur Folge haben kann. Wegen der erforderlichen hohen Anzugsdrehmomente sind bislang keine Aufnehmer verfügbar, deren Empfindlichkeit durch den Montagevorgang praktisch nicht beeinflußt wird.

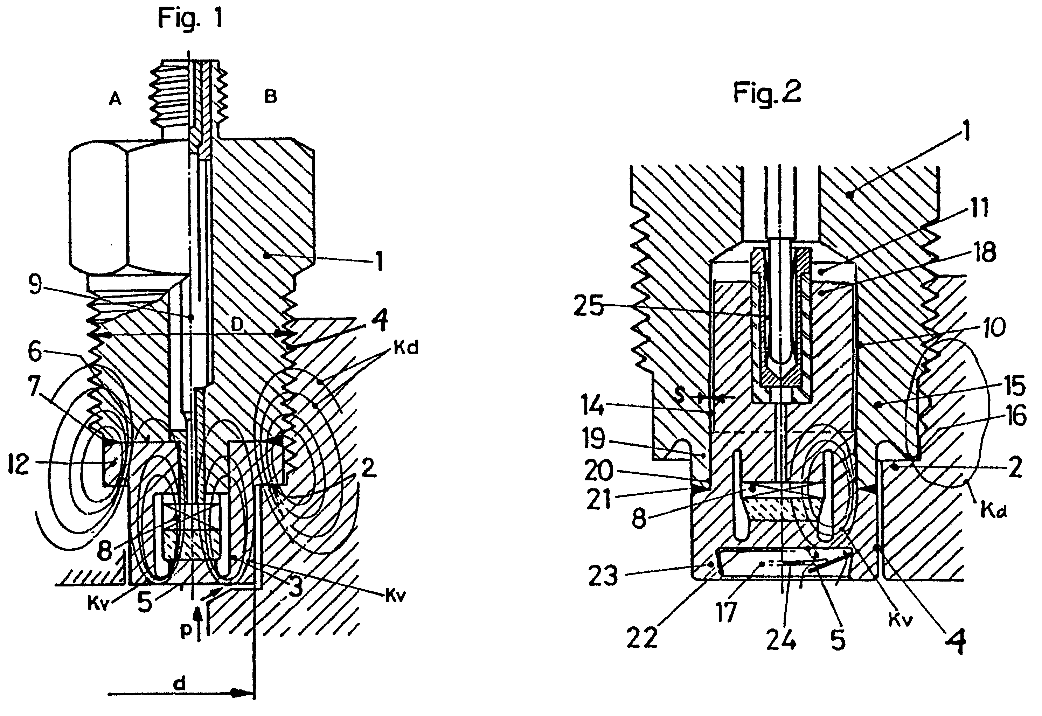

Fig. 1, auf die noch näher eingegangen wird, zeigt einen typischen bekannten piezoelektrischen Hochdruckaufnehmer mit Schulterdichtung. Die Beeinflussung der Empfindlichkeit des Aufnehmers durch den Montagevorgang rührt daher, daß die Dichtkräfte über den Dichtungsflansch in den Sensorteil eindringen. Dies bedingt Spaltfedereffekte im Bereich der Trennebene und Verformungen des Sensorteiles, die sich wiederum auf die die Sensorelemente beaufschlagende Membranpartie des Aufnehmers auswirken. Insbesondere führt dies dazu, daß jeder Einbau des Aufnehmers in die Montagebohrung eine andere Meßempfindlichkeit schafft, so daß es praktisch unmöglich ist, genaue und reproduzierbare Messungen zu erzielen. Aus der EP-A 0 090 872 ist ferner ein Aufnehmer mit Schulterdichtung bekannt, bei dem der Sensorteil mit seiner einen planen Stirnseite an einer benachbarten Planfläche einer den Sensorteil teilweise aufnehmenden Ausnehmung des Montagekörpers anliegt und verschweißt ist. Zwischen der Ausnehmung des Montagekörpers und dem Sensorteil ist ein gegenüber dem zu untersuchenden Druckmedium offener Ringspalt vorgesehen. Zwar verhindert der Ringspalt eine Übertragung der von den Schulterdichtflächen ausgehenden Kraftlinien auf den Sensorteil, doch kann das zu untersuchende Druckmedium über den Ringspalt ins Innere des Aufnehmers gelangen und Beschädigungen hervorrufen.

In Anbetracht dieser mit bekannten Aufnehmern verbundenen Schwierigkeiten liegt der Erfindung die Aufgabe zugrunde, einen Aufnehmer der eingangs erwähnten Gattung zu schaffen, der trotz vielseitiger Verwendungsmöglichkeit einschließlich der Messung der Drücke heisser gasförmiger Druckmedien durch die jeweiligen Einbaubedingungen in seiner Empfindlichkeit im wesentlichen nicht beeinflußt wird.

Die Lösung dieser Aufgabe zeichnet sich durch die Merkmale im kennzeichnenden Teil des Patentanspruches 1 aus.

Durch das Vorsehen des rohrförmigen Ansatzes am Montagekörper des Aufnehmers kann die Stelle, an der der Sensorteil mit dem Montagekörper verbunden ist, so angeordnet werden, daß der Wirkungsbereich der an der Schulterdichtpartie auftretenden Dichtkräfte und der Wirkungsbereich der im Sensorteil herrschenden Vorspannkräfte im wesentlichen voneinander getrennt sind, vorteilhafterweise in verschiedenen Teilen des Aufnehmers liegen. Dies bedeutet, daß der Einflußbereich der Dichtkräfte den Berührungs- und Verbindungsbereich zwischen Sensorteil und Montagekörper im wesentlichen nicht erreicht.

Gemäß einer Weiterbildung der Erfindung kann der Sensorteil eine konzentrische Zentrierpartie aufweisen, die vom rohrförmigen Ansatz dichtend umfaßt ist. Die Trennfläche oder -ebene, an der der Sensorteil und Montagekörper in Anlage miteinander stehen, hat daher eine im wesentlichen axiale Orientierung, die weitgehend mit der Haupterstreckungsrichtung der Sensorvorspannung und der Dichtkräfte übereinstimmt. Dagegen liegen die bei den bekannten Aufnehmern vorgesehenen planen Trenn- oder Anlageflächen quer zur Richtung der Dichtkräfte, was unerwünschte Spaltfedereffekte in der Trennebene zur Folge hat.

Die Eingriffsweise zwischen Sensorteil und Montagekörper vermeidet daher inhärent weitgehend solche Spaltfedereffekte und ist zudem problemlos an einer Stelle längs der Länge des Sensorteiles anzuordnen, die außerhalb des Wirkungsbereiches der Dicht- und Vorspannkräfte liegt, d.h. längs des Abschnittes des Sensorteiles, der im wesentlichen frei in der Montagebohrung des Bauteiles angeordnet ist.

Gemäß einer anderen Weiterbildung der Erfindung kann der rohrförmige Ansatz bis zur Membranpartie verlängert sein, so daß die Membranpartie vom rohrförmigen Ansatz nach Art eines Schutzringes umgeben wird und kann der Sensorteil im Bereich der Membranpartie mit dem rohrförmigen Ansatz verbunden sein. Vorzugsweise steht der Sensorteil außerhalb der Verbindungsstelle durch einen Ringspalt in Abstand vom rohrförmigen Ansatz. Dadurch wird nicht nur eine mechanische Stabilisierung der Membranpartie erreicht, sondern die dem Druckmedium ausgesetzte Stirnfläche des Sensorteiles minimiert. Der Sensorteil kann eine Einheit darstellen, die sich in Serie herstellen und separat vom Aufnehmer prüfen läßt, wonach die Einheit in den rohrförmigen Ansatz eingesetzt und damit verbunden wird. Der Ringspalt zwischen rohrförmigem Ansatz und Sensorteil schafft eine wirksame Trennung der im Sensorteil herrschenden Vorspannkräfte von den Dichtkräften im Bereich der Schulterdichtpartie als auch eine Wärmeisolierung.

Eine bevorzugte andere Weiterbildung der Erfindung sieht ferner vor, daß ein Bereich des Sensorteiles mit (allseitigem) Abstand im Montagekörper aufgenommen ist. Der gebildete Freiraum zwischen Sensorteil und Montagekörper ist gegenüber dem Druckmedium abgedichtet. Dadurch wird einerseits wirksam verhindert, daß das zu untersuchende Druckmedium über den Zylinderspalt zwischen Sensorteil und Montagekörper ins Innere des Aufnehmers gelangen kann, und daß andererseits die durch die Dichtkräfte bewirkten Verformungen des Montagekörpers auf das Sensorteil übertragen werden. Vorteilhafterweise verschließt die Verbindung zwischen Montagekörper und Sensorteil, welche eine Schweißung umfassen kann, den Zylinderspalt.

Der erfindungsgemäße Aufnehmer mit Schulterdichtung zeichnet sich sowohl durch eine hohe Konstanz der Meßempfindlichkeit als auch eine lange Lebensdauer aus, da die empfindliche Membranpartie durch die Dichtkräfte praktisch nicht belastet wird. Die Empfindlichkeit des Aufnehmers wird weder durch die Höhe des Anzugdrehmomentes bei der druckdichten Befestigung des Aufnehmers in der Montagebohrung noch durch elastische Randbedingungen im Abdichtungsbereich, wie Spaltelastizitäten und dgl., noch durch ins Innere des Aufnehmers eindringende Medien mit aggressiver Wirkung, wie heiße Verbrennungsgase, beeinflußt. Damit ist sichergestellt, daß unabhängig von den jeweiligen individuellen Einbau- und Einsatzverhältnissen sowohl die Meßgenauigkeit selbst als auch die Reproduzierbarkeit der Messung über lange Zeit unverändert erhalten bleiben.

Die Erfindung wird nachfolgend anhand bevorzugter Ausführungsformen und der Zeichnung unter vorhergehender Bezugnahme auf den Stand der Technik näher erläutert. Es zeigen:

Fig. 1 in geschnittener Ansicht Hochdruckaufnehmer mit Schulterdichtung bekannter Bauart,
Fig. 2 in geschnittener Ansicht einen Hochdruckaufnehmer mit Schulterdichtung nach der Erfindung.
Fig. 3 den in Fig. 2 gezeigten Aufnehmer mit getrenntem Montagekörper und Sensorteil,
Fig. 4 in fragmentarischer geschnittener Ansicht eine modifizierte Ausführungsform eines Hochdruckaufnehmers nach der Erfindung.

Fig. 1 zeigt einen bekannten Hochdruckaufnehmer mit Schulterdichtung. Die mit A angedeutete linke Hälfte der Figur zeigt einen Aufnehmer, bei dem sich der Sensorteil 3 bis in die Nähe der Mittelachse erstreckt, während bei der auf der rechten Hälfte der Figur gezeigten Ausführung B der Sensorteil in größerem Abstand von der Mittelachse steht. Beide Ausführungen weisen die vorerwähnten Nachteile auf, wobei jedoch der Einfluß der Dichtkräfte Kd auf die inneren Vorspannkräfte Kv bei der Ausführung B etwas geringer ist.

Die Schulterdichtung hat den Vorteil, daß die Membranpartie 5 des Aufnehmers bündig zu der Oberfläche des Meßraumes bzw. einer druckzuführenden Zubringerbohrung angeordnet werden kann. Wie dargestellt, umfaßt der Aufnehmer im wesentlichen zwei Hauptteile, nämlich den Sensorteil 3 und einen Montagekörper 1. Am oberen Bereich des Sensorteiles 3 ist ein Dichtungsflansch 12 angeformt.

Der bekannte Aufnehmer kann in einer Montagebohrung 4 in dem den Meßraum umgrenzenden Bauteil befestigt werden. Die Bohrung 4 hat einen unteren Bohrungsabschnitt mit kleinem Durchmesser d und einen oberen Bohrungsabschnitt mit großem Durchmesser D. Die Bohrungsabschnitte liegen konzentrisch zueinander. Am Übergang des Boh-

rungsabschnittes mit großem Durchmesser zum Bohrungsabschnitt mit kleinem Durchmesser ist eine Absatz- oder Schulterfläche 2 ausgebildet, mit der der Dichtungsflansch 12 am Sensorteil 3 zur Abdichtung des Meßraumes in dichtender Beziehung treten kann. Die Schulterfläche 2 sollte genau senkrecht zur Mittellängsachse der Montagebohrung 4 stehen.

Wie dargestellt, weist der Bohrungsabschnitt mit großem Durchmesser ein Innengewinde auf, dem ein Außengewinde am Montagekörper 1 entspricht, um den Aufnehmer in der Montagebohrung 4 festschrauben zu können.

Im Sensorteil 3 ist, wie dargestellt, ein Sensorelement 8 aufgenommen, bei dem es sich vorzugsweise um ein oder mehrere geeignete Piezokristalle handeln kann, deren elektrische Ladungen über eine durch den Montagekörper 1 sich erstreckende Signalleitung 9 nach außen abgeführt werden. Die dem Druck p des zu untersuchenden Mediums ausgesetzte untere Stirnseite des Aufnehmers umfaßt eine innen verdickte Membranpartie 5, die das durch den Mediumdruck p erzeugte Drucksignal als Kraft auf das Sensorelement 8 überträgt und vorzugsweise mit dem Sensorteil 3 integral verbunden ist. Der Mediumdruck p wirkt sowohl auf die Membranpartie 5 als auch auf die freie Umfangsfläche des Bereiches des Sensorteiles 3, der im Bohrungsabschnitt der Montagebohrung 4 mit kleinem Durchmesser d aufgenommen ist.

Der Sensorteil 3 liegt an seiner dem Montagekörper 1 zugewandten oberen planen Stirnfläche 6 an einer ebensolchen planen Anlagefläche des Montagekörpers 1 an und ist, wie bei 7 angedeutet, damit verschweißt. Die durch die plane Stirnfläche 6 des Sensorteiles 3 definierte Trennebene erstreckt sich senkrecht in Bezug auf die Mittelachse des Aufnehmers.

Zur Erzielung einer ausreichenden Dichtwirkung muß der Dichtungsflansch 12 mit hoher Kraft gegen die Schulterfläche 2 der Montagebohrung 4 gepreßt werden. Dazu sind beim Einschrauben des Montagekörpers 1 in die Montagebohrung 4 entsprechend hohe Anzugsdrehmomente aufzubringen, die im allgemeinen zwischen 20 und 60 Nm betragen können. Die sehr hohen daraus resultierenden Dichtkräfte Kd wirken auf den Sensorteil 3 sowie dessen Verbindungsebene 6 mit dem Montagekörper 1. Der Dichtungsflansch 12 des Sensorteiles 3 wird ferner durch die hohen Dichtkräfte um einen gewissen Betrag gestaucht, was eine ringförmig im Sensorteil 3 verteilte Kraft hervorruft. Diese wiederum bewirkt eine Hebung der Membranpartie 5, was sich in einer Änderung der internen Vorspannung Kv des Sensorteiles 3 und damit der Empfindlichkeit des Aufnehmers äußert.

Der erfindungsgemäß ausgebildete Hochdruckaufnehmer mit Schulterdichtung, bei dem die erwähnten Einbaueinflüsse im wesentlichen keine Rolle spielen, ist in Fig. 2 gezeigt. In der Zeichnung tragen gleiche oder ähnliche Teile, wie bei der Ausführungsform nach Fig. 1, gleiche Bezugszeichen; diese Teile brauchen daher nachfolgend nicht erneut beschrieben zu werden.

Der gezeigte Aufnehmer nach der Erfindung umfaßt einen Sensorteil 18, der an seinem unteren im Abschnitt der Montagebohrung 4 mit kleinem Durchmesser angeordneten Bereich im wesentlichen dem Sensorteil 3 des bekannten Aufnehmers in Fig. 1 entsprechen kann, während ein oberer Abschnitt des Sensorteiles in einer Aussparung 10 im Montagekörper 1 aufgenommen ist. Zwischen der äußeren Umfangsfläche des oberen Abschnittes des Sensorteiles 18 und der inneren Umfangsfläche der Aussparung 10 des Montagekörpers 1 ist ein Ringspalt 14 mit einer geeigneten Breite S vorgesehen.

Der Ringspalt 14 ist, wie dargestellt, an seinem inneren der Bodenfläche der Aussparung 10 zugewandten Ende offen und steht demzufolge in Verbindung mit einem Freiraum 11 zwischen Bodenfläche der Aussparung 10 und zugewandter Stirnfläche des Sensorteiles 18.

An der Unterseite eines die Aussparung 10 definierenden rohrförmigen Wandbereiches 15 des Montagekörpers 1 ist eine im wesentlichen radiale Schulterdichtfläche 16 vorgesehen, die in dichtendem Eingriff mit der Schulterfläche 2 der Montagebohrung 4 treten kann. Die Dichtfläche 16 kann einen konischen Einstich oder eine Aushöhlung haben, die einen Dichtring gemäß der eingangs erwähnten DE-C 1 775 646 aufnehmen kann, auf die insofern Bezug genommen wird.

Wie gezeigt ist am Montagekörper 1 bzw. dessen rohrförmigen Wandbereich 15 nach unten über die Dichtfläche 16 axial hinauserstreckend eine Anschlußpartie oder ein rohrförmiger Ansatz 19 angeformt, der einen geringeren Außendurchmesser als der Wandbereich 15 hat. Der Ansatz 19 definiert eine innere zylindrische Umfangsfläche, welche eine zylindrische Umfangsfläche an einer zwischen oberem und unterem Abschnitt ausgebildeten Zentrierpartie 20 des Sensorteiles 18 umfaßt. Diese Umfangsfläche definieren eine im wesentlichen zylindrische koaxial zur Mittelachse des Aufnehmers liegende Trennebene 21, längs der der Montagekörper 1 und der Sensorteil 18 in Eingriff bzw. Anlage miteinander stehen. Die feste Verbindung der beiden Teile erfolgt vorzugsweise durch eine Schweissung 21 im Bereich der freien Stirnkante des Ansatzes 19, welche gleichzeitig den Zylinderspalt 14 nach unten, d.h. gegenüber dem zu untersuchenden Druckmedium abdichtet, so daß in den Spalt 14 keine Gase oder Verbrennungsrückstände eindringen können. Ferner werden hierdurch für Druckmessungen unerwünschte Toträume vermieden.

Die Verbindungszone 20, 21 zwischen rohrförmigem Ansatz 19 des Montagekörpers 1 und Sensorteil 18 liegt gemäß Fig. 2 so, daß sie von den inneren Vorspannkräften Kv und den Dichtkräften Kd nicht oder nur unwesentlich beeinflußt wird. Vorzugsweise liegt diese Verbindungszone in einem Abschnitt des Sensorteiles 18 zwischen Schulterdichtpartie 16 und Membranpartie 5, der im Abschnitt der Montagebohrung 4 mit kleinem Durchmesser aufgenommen ist. Darauf hinzuweisen ist, daß die dem Montagekörper 1 zugewandte obere oder innere Stirnfläche des Sensorteiles 18 nicht mit dem Montagekörper verbunden ist.

Durch die beschriebenen Maßnahmen wird erreicht, daß die Dichtkräfte Kd um den Sensorteil 18 herumgeleitet werden. Der Spalt 14 verhindert, daß die durch die Dichtkräfte Kd im rohrförmigen Wandbereich 15 des Montagekörpers hervorgerufenen Verformungen auf den Sensorteil 18 übertragen werden.

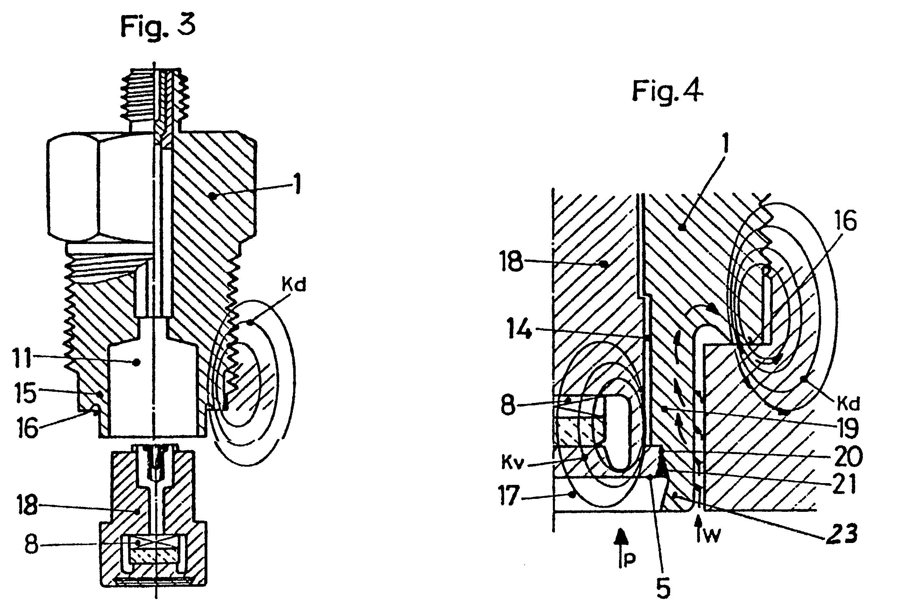

Wie in Fig. 3 dargestellt, können der Sensorteil 18 und der Montagekörper 1 Einheiten darstellen, die unabhängig voneinander (z.B. serienmäßig) hergestellt und geprüft werden können.

Zum Schutz gegen heiße aggressive Gase kann auf der Außenseite der Membranpartie 5 ein auswechselbarer Thermoschutzeinsatz 17 vorgesehen sein, welcher in der CH-C 446 761 näher beschrieben ist, so daß hierauf Bezug genommen werden kann. Durch geeignete Gestaltung der Membranpartie 5 lassen sich druckelastische und dennoch sehr stabile Membrankonstruktionen erzielen, worauf in der CH-C 587 478 (& DE-A 2 544 506) näher eingegangen wird.

Eine modifizierte Ausführungsform der Erfindung ist in Fig. 4 gezeigt. Diese Ausführungsform zeichnet sich dadurch aus, daß der rohrförmige Ansatz 19 des Montagekörpers 1 bis über die Membranpartie 5 hinaus verlängert ist, um einen Schutzring 23 zu bilden, der die Membranpartie 5 schützend außen umgibt. Der verlängerte Ansatz 19 kann ferner, wie dargestellt, einen Membranvorraum 17 zur Aufnahme des Thermoschutzeinsatzes 22 und/oder einer in Fig. 2 gezeigten auswechselbaren Schutzkappe 24 bilden. Die dem Druckmedium ausgesetzte Fläche des Sensorteiles 18 ist hierdurch minimiert.

Bei dieser Ausführungsform ist die Verbindung zwischen Sensorteil 18 und Montagekörper 1, welche wiederum vorzugsweise eine Schweissung 20 umfassen kann, in den Bereich der Membranpartie 5 verlegt. Dadurch wird eine noch größere Entfernung der Verbindungszone von dem durch die Dichtkräfte Kd beeinflußten Gebiet erreicht. Zwischen dem verlängerten rohrförmigen Ansatz 19 und der davon umgebenden Umfangswand des Sensorteiles 18 ist ein Zylinderspalt 14' vorgesehen, der nach unten durch die Schweissung 20 gegen einen Eintritt des zu untersuchenden Druckmediums verschlossen ist. Diese Maßnahmen bewirken, daß der durch die heißen Gase verursachte Wärmefluß im wesentlichen nicht im Sensorteil 18 stattfindet. Der Wärmefluß W erfolgt vielmehr bevorzugt durch den rohrförmigen Ansatz 19 in den Montagekörper 1, wie dies durch die Pfeile in Fig. 4 angedeutet ist. Dadurch werden thermische Auswirkungen auf den Vorspannungszustand des Sensorteiles 18 erheblich verringert. Bezüglich anderer Details der in Fig. 4 gezeigten Ausführungsform kann auf Fig. 2 mit zugehöriger Beschreibung verwiesen werden.

In Weiterbildung der Erfindung kann ferner der Sensorteil 18 ein in sich geschlossenes Aufnehmerelement oder eine Einheit darstellen, die in Serie vorfabriziert und separat vorgeprüft werden kann, worauf sie in beliebige Montagekörper 1 eingebaut bzw. eingeschweißt werden kann. Vorzugsweise enthält die Einheit eine in Fig. 2 angedeutete Steckverbindung 25 zur Signalableitung.

Es versteht sich, daß die Erfindung anhand der gegebenen Lehre ohne Abweichen von ihrem Schutzbereich geändert und modifiziert werden kann. So kann, wenn erwünscht, die feste Verbindung zwischen Sensorteil und Montagekörper statt durch eine Schweissung z.B. durch Preßsitz der entsprechenden Zylinderflächen oder durch eine Schnappverbindung erfolgen.

Die axiale Lage der Eingriffszone zwischen Montagekörper und Sensorteil ist nicht auf die beschriebenen und gezeigten Verhältnisse beschränkt, sondern kann verändert werden, solange die gewünschte Wirkung erzielt wird, daß die herrschenden Dicht- und Vorspannkräfte Kd und Kv einander nicht oder nur unwesentlich beeinflussen. Anstelle der bevorzugten Piezokristalle als Sensorelement können auch Widerstandsmeßelemente, piezoresistive Sensoren und dgl. vorgesehen werden.

## Patentansprüche

1. Aufnehmer, insbesondere für Hochdruckmessungen, bestehend aus einem in einer Bohrung eines Bauteiles befestigbaren Montagekörper mit einer Schulterdichtpartie zur Abdichtung des Aufnehmers gegenüber der Bohrung, und einem mit dem Montagekörper verbundenen Sensorteil mit einer ein Sensorelement beaufschlagenden Membranpartie, dadurch gekennzeichnet, daß der Montagekörper (1) einen axial über die Schulterdichtpartie (16) hinausragenden rohrförmigen Ansatz (19) aufweist, längs dem die Verbindung zwischen dem Sensorteil (18) und dem Montagekörper (1) im wesentlichen vorgesehen ist, um eine Übertragung der im Bereich der Schulterdichtpartie (16) auftretenden Montage- und Dichtkräfte (Kd) auf den Sensorteil (18) im wesentlichen zu vermeiden.

2. Aufnehmer nach Anspruch 1, dadurch gekennzeichnet, daß der Sensorteil (18) eine konzentrische Zentrierpartie (20) aufweist, die vom rohrförmigen Ansatz (19) dichtend umfaßt ist.

3. Aufnehmer nach Anspruch 1, dadurch gekennzeichnet, daß der rohrförmige Ansatz (19) wenigstens bis zur Membranpartie (5) verlängert ist, um die Membranpartie nach Art eines Schutzringes (23) zu umgeben.

4. Aufnehmer nach Anspruch 3, dadurch gekennzeichnet, daß der Sensorteil (18) im Bereich der Membranpartie (5) mit dem rohrförmigen Ansatz (19) verbunden ist.

5. Aufnehmer nach Anspruch 4, dadurch gekennzeichnet, daß der Sensorteil (18) vom rohrförmigen Ansatz (19) außerhalb der Verbindungsstelle beabstandet ist.

6. Aufnehmer nach einem der vorhergehenden Ansprüche mit einem mit Abstand im Montagekörper (1) aufgenommenen Bereich des Sensorteiles (18), dadurch gekennzeichnet, daß der Freiraum (11, 14) zwischen Sensorteil (18) und Montagekörper (1) gegenüber dem Druckmedium abgedichtet ist.

7. Aufnehmer nach einem der vorhergehenden Ansprüche, dadurch gekennzeichnet, daß der Sensorteil (18) mit dem rohrförmigen Ansatz (19) verschweißt ist.

8. Aufnehmer nach einem der vorhergehenden Ansprüche, dadurch gekennzeichnet, daß der Sensorteil (18) ein in sich geschlossenes Aufnehmerelement ist, das vor Einbau in einen Montagekörper (1) in Serien vorfabrizierbar und separat prüfbar ist.

9. Aufnehmer nach einem der vorhergehenen Ansprüche, dadurch gekennzeichnet, daß die flache Membranpartie (5) mit einer elastischen Schutzmembran (22) vor den Angriffen des Gasstrahles geschützt ist.

10. Aufnehmer nach einem der vorhergehenden Ansprüche, dadurch gekennzeichnet, daß in einem Membranvorraum (17) eine elastische auswechselbare Flammschutzkappe (24) mit Gasdurchtrittsschlitzen oder -löchern angeordnet ist, welche den gebündelten Gasstrahl diffus auf die Membranpartie (5) lenkt.

11. Aufnehmer nach einem der vorhergehenden Ansprüche, dadurch gekennzeichnet, daß die Dichtkräfte (Kd) von den im Sensor (18) verlaufenden Vorspannkräften (Kv) durch einen Zylinderspalt (14) zwischen Sensorteil (18) und Montagekörper (1) separiert sind.

## Revendications

1. Détecteur, en particulier pour la mesure de pressions élevées, comportant un corps de montage pouvant être fixé dans un orifice d'un organe et présentant un épaulement d'étanchéité destiné à assurer l'étanchéité du détecteur par rapport à l'orifice de montage, et une pièce de détection reliée au corps de montage et présentant une partie membrane agissant sur un élément de détection, caractérisé en ce que le corps de montage (1) présente un épaulement tubulaire (19) se prolongeant axialement au-delà de l'épaulement d'étanchéité (16), le long duquel la jonction entre la pièce de détection (18) et le corps de montage (1) est substantiellement prévue, afin d'éviter la transmission des forces de montage et de serrage (Kd) apparaissant dans la zone de l'épaulement d'étanchéité (16) vers la pièce de détection (18).

2. Détecteur suivant la revendication 1, caractérisé en ce que la pièce de détection (18) présente une zone de centrage concentrique (20), laquelle est logée de façon étanche dans l'épaulement tubulaire (19).

3. Détecteur suivant la revendication 1, caractérisé en ce que l'épaulement tubulaire (19) se prolonge au moins jusque la partie membrane (5), afin d'entourer la partie membrane à la manière d'un anneau de garde (23).

4. Détecteur suivant la revendication 3, caractérisé en ce que la pièce de détection (18) est reliée à l'épaulement tubulaire (19) dans la région de la partie membrane (5).

5. Détecteur suivant la revendication 4, caractérisé en ce que la pièce de détection (18) se trouve à une certaine distance de l'épaulement tubulaire (19), en dehors du point de jonction.

6. Détecteur suivant une des revendications qui précèdent, comportant une région de la pièce de détection (18) logée dans le corps de montage (1), à une certaine distance de celui-ci, caractérisé en ce que l'espace libre (11, 14) entre la pièce de détection (18) et le corps de montage (1) est étanche au milieu de pression.

7. Détecteur suivant une des revendications qui précèdent, caractérisé en ce que la pièce de détection (18) est soudée à l'épaulement tubulaire (19).

8. Détecteur suivant une des revendications qui précèdent, caractérisé en ce que la pièce de détection (18) est un élément de détecteur séparé entièrement fermé, lequel peut être préfabriqué en série et testé séparément avant installation dans un corps de montage (1).

9. Détecteur suivant une des revendications qui précèdent, caractérisé en ce que la partie membrane plane (5) est protégée contre l'action du jet de gaz par une membrane de protection élastique (22).

10. Détecteur suivant une des revendications qui précèdent, caractérisé en ce qu'une pièce pare-flammes souple remplaçable (24) présentant des fentes ou des orifices de passage du gaz, laquelle dirige de manière diffuse le jet de gaz en faisceau vers la partie membrane (5), se trouve insérée dans une chambre (17) prévue avant la membrane (5).

11. Détecteur suivant une des revendications qui précèdent, caractérisé en ce que les forces de serrage (Kd) sont séparées des forces de précontrainte (Kv) présentes au sein de la pièce de détection (18) au moyen d'un espace cylindrique (14) prévu entre la pièce de détection (18) et le corps de montage (1).

## Claims

1. A transducer particularly for high pressure measurements, comprising a mounting member adapted to be mounted in a hole of a structural member and having a shoulder sealing portion for sealing the transducer relative to the hole, and a sensor member connected to the mounting member and having a diaphragm portion acting on a sensor element, wherein the mounting member (1) has a tubular extension (19) projecting axially from the shoulder sealing portion (16), said connection between the sensor member (18) and the mounting member (1) is substantially provided along said extension, whereby a transmission to the sensor member of the mounting and sealing forces prevailing in the region of the shoulder sealing portion is substantially prevented.

2. The transducer according to claim 1, wherein the sensor member (18) comprises a concentric centering portion (20) encompassed in a sealing manner by the tubular extension (19).

3. The transducer according to claim 1, wherein the tubular extension (19) extends at least up to the diaphragm portion (5) for surrounding the diaphragm portion in the manner of a protective ring (23).

4. The transducer according to claim 3, wherein the sensor member (18) is connected to the tubular extension (19) in the region of the diagraphm portion (5).

5. The transducer according to claim 4, wherein the sensor member (18) is spaced from the tubular extension (19) outside the connecting point.

6. The transducer according to one of the preceding claims, in which a portion of the sensor member (18) is received in the mounting member (1) in a spaced relation thereto, wherein the clearance (11, 14) between the sensor member (18) and the mounting member (1) is sealed against the pressure medium.

7. The transducer according to one of the preceding claims, wherein the sensor member (18) is welded to the tubular extension (19).

8. The transducer according to one of the preceding claims, wherein the sensor member (18) is a self-contained transducer element adapted to be prefabricated in mass production and separately tested prior to installation in a mounting member (1).

9. The transducer according to one of the preceding claims, wherein the diagraphm portion (5) has a flat configuration and is protected from attacks by gas jets by means of an elastic protective diaphragm (22).

10. The transducer according to one of the preceding claims, wherein an elastic replaceable flame protection cap (20) having gas flow slots or holes is disposed in a diaphragm antechamber (17), said cap directs bundled gas jets to the diagraphm portion (5) in a diffused manner.

11. The transducer according to one of the preceding claims, wherein the sealing forces (Kd) are separated from the prestress forces (Kv) prevailing in the sensor member (18) by means of a cylindrical gap (14) between the sensor member (18) and the mounting member (1).

Fig.1

Fig.2

## Fig. 3

## Fig. 4

EP 0 230 491 B1